# EUROPÄISCHE PATENTSCHRIFT

(11) **EP 1 697 181 B1**
(45) Veröffentlichungstag und Bekanntmachung des Hinweises auf die Patenterteilung: **18.08.2010**
(21) Anmeldenummer: 04803667.7
(22) Anmeldetag: 09.12.2004
(51) Int. Cl.: B60R 21/20

(54) **ARMATURENTAFEL FÜR EIN KRAFTFAHRZEUG**
DASHBOARD FOR A MOTOR VEHICLE
TABLEAU DE BORD DE VEHICULE AUTOMOBILE

(30) Priorität: 19.12.2003 DE 10360584
(43) Veröffentlichungstag der Anmeldung: 06.09.2006
(73) Patentinhaber: Johnson Controls Interiors GmbH & Co. KG, 47929 Grefrath (DE); Opel Eisenach Gmbh, 99817 Eisenach (DE)
(72) Erfinder: JOST, Fritz, 47929 Grefrath (DE); BITTNER, Martin, 47546 Kalkar (DE); JORDAN, Johannes, 41334 Nettetal (DE); SCHREINER, Ralf, 55276 Oppenheim (DE)
(74) Vertreter: Hemmelmann, Klaus
(86) Internationale Anmeldenummer: PCT/EP2004/014006
(87) Internationale Veröffentlichungsnummer: WO 2005/063531

(56) Entgegenhaltungen:
- WO-A-03/033310
- DE-A1- 19 618 817
- US-B1- 6 250 678

## Beschreibung

Die Erfindung betrifft eine Armaturentafel für ein Kraftfahrzeug mit einem Träger, einem Airbagdeckel und einem unterhalb des Airbagdeckels an einer Fahrzeugstruktur fixierten Airbagmodul, an welchem die Armaturentafel über eine Stützstruktur abstützbar ist, sowie ein mit einer solchen Armaturentafel ausgestattetes Kraftfahrzeug.

### Stand der Technik

Aus der Offenlegungsschrift DE 199 49 170 A1 ist eine gattungsgemäße Armaturentafel bekannt. Sie besteht aus einem mit einer Schaumlage und einer Dekorfolie kaschierten Träger, in den ein Airbagdeckel integriert ist. Das unterhalb des Airbagdeckels angeordnete Airbagmodul ist einerseits an einer Stützstruktur in Form einer nach unten aus dem Träger auskragenden, umlaufenden Rippe befestigt, welche den Schußkanal für den Airbag bildet. Hierzu sind am Airbagmodul Eingriffsklauen vorgesehen, die in Eingriff mit Ausnehmungen in der umlaufenden Rippe (Anbringungsflanschabschnitt) stehen. Andererseits ist das Airbagmodul an einem rohrförmigen Rahmenelement des Fahrzeugkörpers mittels einer Verschraubung fixiert.

Kräfte, die senkrecht auf die Oberfläche der Armaturentafel einwirken, werden somit unverzüglich über das Airbagmodul in die Fahrzeugkarosserie abgeleitet. Bei einem unfallbedingten Aufprall des Kopfes eines Fahrzeuginsassen kann dies unzulässig hohe Belastungen für den Insassen zur Folge haben.

Den gleichen Nachteil weist die in DE 102 41 599 A1 beschriebene Armaturentafel auf.

DE 19618817 A1 beschreibt ein Armaturentafel gemäß der Oberbegriff des Anspruchs 1.

### Aufgabe

Der Erfindung liegt die Aufgabe zugrunde, eine Armaturentafel für ein Kraftfahrzeug mit einer verbesserten Insassensicherheit bereitzustellen.

### Lösung

Die Aufgabe wird erfindungsgemäß dadurch gelöst, dass die Stützstruktur im normalen Gebrauch gegenüber dem Airbagmodul beabstandet und bei einer auf die Armaturentafel wirkenden Überlast mit diesem in kraftübertragenden Kontakt bringbar ist. Der Kopfaufprall eines Sitzinsassen wird infolge dieser Ausbildung durch eine elastische Verformung der vergleichsweise weichen Armaturentafel gemildert. Die Abstützung auf dem Airbagmodul, welche ein Kollabieren der Armaturentafel verhindert, erfolgt erst einige Millisekunden nach dem Aufprall des Kopfes, wodurch Belastungsspitzen abgeschwächt werden.

Die Stützstruktur besteht mit Vorteil aus einem den Schußkanal für den Airbag bildenden, bevorzugt dünnwandigen Formteil, so dass zur Umsetzung der Erfindung keine zusätzlichen Bauteile erforderlich werden. Die Entfaltung des Airbags wird durch diese Doppelfunktion nicht beeinträchtigt. Eine einfach durchführbare Anpassung vorbekannter Schußkanäle kann dadurch erfolgen, dass das Formteil eine sich von der Armaturentafel in Richtung des Airbagmoduls erstreckende, im Wesentlichen U-förmige Schulter aufweist, deren Bodenfläche zumindest partiell mit dem Airbagmodul in Kontakt bringbar ist.

Dabei wird die vom Airbagmodul wegweisenden Bodenfläche der Schulter vorzugsweise kongruent zur zugeordneten Kante des Airbagmoduls gekröpft ausgebildet, wobei die Schulter auf der oberen, im Wesentlichen horizontal verlaufenden Kante des Airbagmoduls abstützbar ist.

Besonders günstige Verzögerungswerte werden erreicht, wenn die Stützstruktur in normalem Gebrauch orthogonal zur Oberfläche der Armaturentafel einen Abstand von 5 mm bis 15 mm, insbesondere etwa 10 mm, aufweist.

Der Erfindung steht nicht entgegen, dass der Spalt zwischen der Stützstruktur und dem Airbagmodul ganz oder teilweise mit einem verformungsweichen Werkstoff, insbesondere einem Kunststoffschaum, ausgefüllt ist. Hierzu kann beispielsweise ein Schaumstoffstreifen auf die betreffenden Bereiche des Schußkanals und/oder Airbagmoduls aufgeklebt werden, der sich beim Auftreffen des Kopfes auf die Armaturentafel leicht komprimieren läßt, jedoch Klappergeräusche beim Betrieb des Fahrzeugs verhindert.

Mit Vorteil wird die Stützstruktur aus einem Holzfaserwerkstoff gefertigt, insbesondere aus FIBRIT^{®}, wobei die Wanddicke des Formteils bevorzugt 2,0 bis 2,5 mm beträgt. Dieser Werkstoff verbindet günstige mechanische Eigenschaften mit einem niedrigen Gewicht (Dichte etwa 0,70 bis 0,90 g/cm³) und guter Verarbeitbarkeit.

### Figuren

Die Figuren stellen beispielhaft und schematisch einen Querschnitt durch eine Ausführung der Erfindung dar.

Die abgebildete Armaturentafel 1 besteht aus einem Träger 2 aus einem formsteifen Werkstoff, der auf seiner dem Fahrzeuginnenraum 3 zugewandten Oberfläche zur Verbesserung der optischen und haptischen Eigenschaften mit einer schaumgefütterten Folie (nicht dargestellt) überzogen ist.

Unterhalb der Armaturentafel 1 ist ein Airbagmodul 4 mit einem steifen Gehäuse 5 angeordnet, das einen im Crashfall zum Fahrzeuginnenraum 3 hin entfaltbaren Luftsack und einen Gasgenerator enthält. Das Gehäuse 5 weist auf seiner Unterseite einen angeformten Flansch 6 auf, mittels dessen das Airbagmodul 4 mit einem Querträger 7 der Fahrzeugstruktur verbunden ist.

Bei seiner Entfaltung wird der Airbag in einem Schußkanal 8 zu einer in den Träger 2 integrierten Austrittsöffnung 9 geführt, wobei er in den Träger 2 eingelassene, über eine Sollbruchkerbe 10 miteinander verbundene Deckelsegmente 11, 11' aufsprengt. Diese schwenken unter Freigabe der Entfaltungsöffnung in die gestrichelt dargestellte Position.

Der Schußkanal 8 wird durch ein dünnwandiges Formteil 12 gebildet, das den Schußkanal 8 vollumfänglich umgibt und im Bereich der oberen horizontalen Kante 13 des Airbagmoduls 4 mit einer Schulter 14 versehen ist. Im Bereich parallel zur Innenfläche des Trägers 2 verlaufender Flansche 15, 15' ist das Formteil 12 mit dem Träger 2 verklebt.

Die Schulter 14, die eine die Kante 13 umgreifende Kröpfung 16 aufweist, ist bei normalem Gebrauch des Fahrzeugs gegenüber dem Airbagmodul 4 beabstandet, wobei der Abstand a, orthogonal zum Träger 2 gemessen, etwa 10 mm beträgt. In den hierdurch entstanden Spalt 17 kann zur Vermeidung einer direkten Berührung von Gehäuse 5 und Formteil 12 in normalem Gebrauch ein Schaumstoffstreifen 18 aus einem leicht komprimierbaren Werkstoff eingebracht werden. Ferner kann auch der Raum 19 zwischen Formteil 12 und Träger 2 zur Erhöhung der Steifigkeit der Schulter 14 ausgeschäumt oder mit versteifenden Einlagen versehen werden.

Im Crashfall wird die Armaturentafel 1 durch eine in Richtung des Pfeils X (Kopfaufprall) wirkende Kraft derart verformt, dass das Formteil 12 sich auf dem Airbagmodul 4 abstützt (gestrichelte Kontur). Die vor der Abstützung ermöglichte Deformation verzehrt einen Teil der beim Kopfaufprall auftretenden Energie und mildert auf diese Weise auf den Insassen wirkende Belastungsspitzen. Die nachfolgend einsetzende Abstützung hingegen verhindert ein Kollabieren der Armaturentafel, wobei das Formteil 12 als Stützstruktur dient, die gegebenenfalls auch einstückig an den Träger 2 angeformt sein kann.

### Bezugszeichen

- 1: Armaturentafel
- 2: Träger
- 3: Fahrzeuginnenraum
- 4: Airbagmodul
- 5: Gehäuse
- 6: Flansch
- 7: Querträger
- 8: Schußkanal
- 9: Entfaltungsöffnung
- 10: Sollbruchkerbe
- 11: Deckelsegment
- 12: Formteil
- 13: Kante
- 14: Schulter
- 15: Flansch
- 16: Kröpfung
- 17: Spalt
- 18: Schaumstoffstreifen
- 19: Raum

- a: Abstand
- X: Pfeil

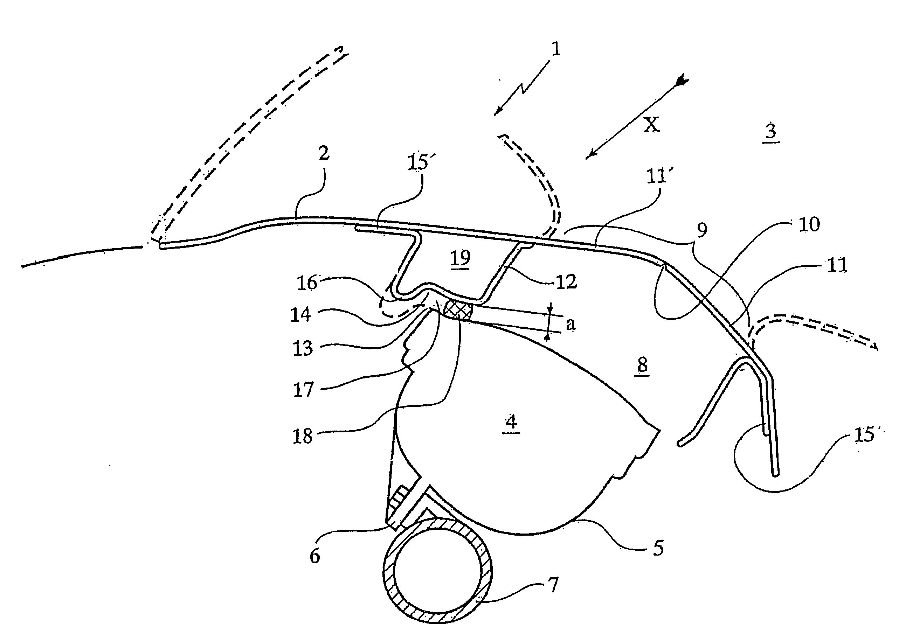

## Patentansprüche

1. Armaturentafel (1) für ein Kraftfahrzeug mit einem Träger, einem Airbagdeckel und einem unterhalb des Airbagdeckels an einer Fahrzeugstruktur fixierten Airbagmodul (4), an welchem die Armaturentafel über eine den Schusskanal (8) für den Airbag bildenden Stützstruktur abstützbar ist, welche im normalen Gebrauch gegenüber dem Airbagmodul (4) beabstandet und bei einer auf die Armaturentafel (1) wirkenden Überlast mit diesem in kraftübertragenden Kontakt bringbar ist, **dadurch gekennzeichnet, dass** die Stützstruktur aus einem dünnwandigen Formteil (12) besteht, welches mit dem Airbagmodul in Kontakt bringbar ist.

2. Armaturentafel nach Anspruch 1, **dadurch gekennzeichnet, dass** das Formteil (12) eine sich von der Armaturentafel (1) in Richtung des Airbagmoduls (4) erstreckende, im Wesentlichen U-förmige Schulter (14) aufweist, deren Bodenfläche zumindest partiell mit dem Airbagmodul in Kontakt bringbar ist.

3. Armaturentafel nach Anspruch 2, **dadurch gekennzeichnet, dass** die vom Airbagmodul (4) wegweisende Bodenfläche der Schulter (14) kongruent zur zugeordneten Kante (13) des Airbagmoduls gekröpft ausgebildet ist.

4. Armaturentafel nach Anspruch 2 oder 3, **dadurch gekennzeichnet, dass** die Schulter (14) auf der oberen, im Wesentlichen horizontal verlaufenden Kante (13) des Airbagmoduls abstützbar ist.

5. Armaturentafel nach einem der vorhergehenden Ansprüche, **dadurch gekennzeichnet, dass** die Stützstruktur in normalem Gebrauch orthogonal zur Oberfläche der Armaturentafel (1) einen Abstand (a) von 5 mm bis 15 mm, insbesondere etwa 10 mm, aufweist.

6. Armaturentafel nach einem der vorhergehenden Ansprüche, **dadurch gekennzeichnet, dass** der Spalt (17) zwischen der Stützstruktur und dem Airbagmodul (4) zumindest partiell mit einem verformungsweichen Werkstoff, insbesondere einem Kunststoffschaum, ausgefüllt ist.

7. Armaturentafel nach einem der vorhergehenden Ansprüche, **dadurch gekennzeichnet, dass** die Stützstruktur aus einem Holzfaserwerkstoff gefertigt ist.

8. Kraftfahrzeug mit einer Armaturentafel nach einem der vorhergehenden Ansprüche.

## Claims

1. Dashboard (1) for a motor vehicle, with a support, an airbag cover and an airbag module (4) which is fixed to a vehicle structure below the airbag cover and on which the dashboard can be supported via a supporting structure which forms the firing channel (8) for the airbag and which, in normal use, is spaced apart from the airbag module (4) and, upon an overload acting on the dashboard (1), can be brought into force-transmitting contact with said airbag module, **characterized in that** the supporting structure consists of a thin-walled shaped part (12) which can be brought into contact with the airbag module.

2. Dashboard according to Claim 1, **characterized in that** the shaped part (12) has a substantially U-shaped shoulder (14) which extends from the dashboard (1) in the direction of the airbag module (4) and the base surface of which can be brought at least partially into contact with the airbag module.

3. Dashboard according to Claim 2, **characterized in that** the base surface of the shoulder (14), said base surface pointing away from the airbag module (4), is designed to be bent congruently to the associated edge (13) of the airbag module.

4. Dashboard according to Claim 2 or 3, **characterized in that** the shoulder (14) can be supported on the upper, substantially horizontally running edge (13) of the airbag module.

5. Dashboard according to one of the preceding claims, **characterized in that**, during normal use, the supporting structure is at a distance (a) of 5mm to 15mm, in particular approximately 10mm, orthogonally with respect to the surface of the dashboard (1).

6. Dashboard according to one of the preceding claims, **characterized in that** the gap (17) between the supporting structure and the airbag module (4) is at least partially filled with an easily deformable material, in particular a plastics foam.

7. Dashboard according to one of the preceding claims, **characterized in that** the supporting structure is manufactured from a wood fibre material.

8. Motor vehicle with a dashboard according to one of the preceding claims.

## Revendications

1. Tableau de bord (1) pour un véhicule automobile comprenant un support, un couvercle d'airbag et un module d'airbag (4) fixé sous le couvercle d'airbag sur une structure du véhicule, sur lequel le tableau de bord peut être supporté par le biais d'une structure de support formant le canal d'éjection (8) pour l'airbag, laquelle est espacée du module d'airbag (4) pendant l'utilisation normale et en cas de surcharge agissant sur le tableau de bord (1) peut être amenée en contact de transfert de force avec celui-ci, **caractérisé en ce que** la structure de support se compose d'une pièce moulée à paroi mince (12) qui peut être amenée en contact avec le module d'airbag.

2. Tableau de bord selon la revendication 1, **caractérisé en ce que** la pièce moulée (12) présente un épaulement (14) essentiellement en forme de U s'étendant depuis le tableau de bord (1) dans la direction du module d'airbag (4), dont la surface de fond peut être amenée au moins en partie en contact avec le module d'airbag.

3. Tableau de bord selon la revendication 2, **caractérisé en ce que** la surface de fond de l'épaulement (14) tournée à l'opposé du module d'airbag (4) est réalisée sous forme coudée de manière coïncidente avec l'arête associée (13) du module d'airbag.

4. Tableau de bord selon la revendication 2 ou 3, **caractérisé en ce que** l'épaulement (14) peut être supporté sur l'arête (13) supérieure, s'étendant essentiellement horizontalement, du module d'airbag.

5. Tableau de bord selon l'une quelconque des revendications précédentes, **caractérisé en ce que** la structure de support présente, pendant l'utilisation normale, perpendiculairement à la surface du tableau de bord (1), un espacement (a) de 5 mm à 15 mm, notamment d'environ 10 mm.

6. Tableau de bord selon l'une quelconque des revendications précédentes, **caractérisé en ce que** la fente (17) entre la structure de support et le module d'airbag (4) est au moins en partie remplie d'un matériau souple déformable, notamment d'une mousse de caoutchouc.

7. Tableau de bord selon l'une quelconque des revendications précédentes, **caractérisé en ce que** la structure de support est fabriquée en un matériau en fibres de bois.

8. Véhicule automobile comprenant un tableau de bord selon l'une quelconque des revendications précédentes.
